# EUROPÄISCHE PATENTANMELDUNG

(11) **EP 0 908 611 A2**
(43) Veröffentlichungstag der Anmeldung: **14.04.1999**
(21) Anmeldenummer: 98117762.9
(22) Anmeldetag: 18.09.1998
(51) Int. Cl.: F02D 11/10, F02D 41/22

(54) **Überwachungsverfahren für Vorgabewerte für eine Motorsteurelektronik**

(30) Priorität: 06.10.1997 DE 19744039
(71) Anmelder: Mannesmann VDO Aktiengesellschaft, 60388 Frankfurt am Main (DE)
(72) Erfinder: Wendling, Armin, 56290 Beltheim-Mannebach (DE); Göhring, Frank, 60318 Frankfurt (DE); Mühlberger, Stefan, 65195 Wiesbaden (DE)
(74) Vertreter: Klein, Thomas, Dipl.-Ing.

(57) **Zusammenfassung**

Das Verfahren dient zur Überwachung und Ermittlung von Vorgabewerten für eine Motorsteuerelektronik bei Fahrzeugen mit elektronischem Fahrpedal. Bei bekannten Verfahren wurde das Signal eines zweiten Sensors passiv zur Überwachung des Führungssignals eines ersten Sensors herangezogen. Zur Vermeidung starrer Fehlerschwellen, die sich nur mit verhältnismäßig hohen Kosten verringern lassen, wird ein Verfahren vorgeschlagen, bei welchem im Falle erhöhter Abweichungen der beiden Sensorsignale voneinander eine Korrektur des Führungssignals unter aktiver Einbeziehung des zweiten Sensorsignals erfolgt. Das Verfahren kann bei gleichbleibenden Kosten zur Verbesserung der Systemeigenschaften herangezogen werden oder es kann helfen, die Kosten durch Einsatz preisgünstigerer Sensoren zu verringern, ohne daß die praktischen Systemeigenschaften verschlechtert werden würden.

## Beschreibung

Die Erfindung befaßt sich mit einem Verfahren zur Übewachung und Ermittlung von Vorgabewerten für eine Motorsteuerelektronik bei mit einer elektrischen Fahrpedalanlage ausgerüsteten Fahrzeugen, bei welcher die Fahrpedalstellung von wenigstens zwei unabhängig voneinander arbeitenden Sensoren erfaßt wird, von denen einer ein Führungssignal erzeugt, das in geeigneter Weise aufbereitet normalerweise zur Ansteuerung der Motorsteuerelektronik eingesetzt wird, während das Signal des zweiten Sensors zur Überwachung des Führungssignals herangezogen wird.

Bei Fahrzeugen mit elektronischen Gaspedalen (drive by wire) werden Aktuatoren zur Erkennung des Fahrerwunsches benötigt, wie z.B. Pedalwertgeber oder Fahrpedalmodule. Diese Aktuatoren verfügen über Sensoren (z.B. Potentiometer, Hall-Sensoren, optische Sensoren und dgl.), die ein der Fahrpedalstellung entsprechendes Sollwertsignal erzeugen.

Um die Sollwertvorgabe auch bei einem defekten Sensor sicher überwachen zu können, ist ein in der Regel aus wenigstens zwei Sensoren bestehendes Sensorsystem notwendig. Die Kennlinien der beiden Sensoren werden zur Erhöhung der Wahrscheinlichkeit der Fehlererkennung gewöhnlich unterschiedlich ausgeführt, z.B. steigend und fallend und/oder steil und flach. Einer der beiden Sensoren erzeugt dabei im Normalfall die zur Ansteuerung der Motorelektronik verwendete Führungsgröße, während der zweite Sensor, dessen Genauigkeit aus Kostengründen etwas geringer als die des Führungssensors ist, zur Überwachung der Führungsgröße dient.

Grundsätzlich erachtet man Sollwertvorgaben für sicherheitskritisch, die größer als der eigentliche Fahrerwunsch sind. Zur exakten Ermittlung des Fahrerwunsches stehen jedoch nur die beiden Sensorsignale zur Verfügung.

Erschwerend kommt hinzu, daß die Sensorsignale gewissen Toleranzen unterliegen, die auf Fertigungsungenauigkeiten, Verschleißerscheinungen über die Lebensdauer der Sensoren, Fehler bei der Signalübertragung (EMV-Einstrahlung, Übergangswiderstände oder Nebenschlüsse im Kabelbaum) und Bauteiltoleranzen bei der Signalaufbereitung in der Motorsteuerelektronik zurückzuführen sind.

Hieraus wird deutlich, daß frühestens dann auf einen Fehler erkannt werden darf, wenn die Summe aller zulässigen Toleranzen überschritten ist, da ansonsten die Verfügbarkeit des Fahrzeuges beeinträchtigt werden würde. Das Fahrzeug würde liegenbleiben oder könnte nur noch in stark eingeschränktem Notfahrbetrieb benutzt werden. Weiterhin sollen auch bei auftretenden Maximaltoleranzen sämtliche Motorfunktionen, wie z.B. Lehrlaufregelung, Teillast, Vollast und ggf. noch Kick-Down durchführbar sein. Arbeitet ein an sich intakter Sensor (Sollwertgeber) an einer Toleranzgrenze und wird sein Signal durch externe Einflüsse (z.B. Nebenschluß) zusätzlich, jedoch ebenfalls innerhalb einer zulässigen Toleranz, verzogen, so darf dennoch kein sicherheitskritischer Fahrzustand auftreten. Dies hat zur Folge, daß man die auftretenden Toleranzen minimieren muß, was jedoch hohe Kosten nach sich zieht.

Auch Komfortansprüche, wie z.B. Leerlaufpedalspiel, hohe Auflösung im Teillastbereich, gesicherte Vollast und ggf. Kick-Down-Erkennung, können bei der Auslegung des Systems nicht außer acht gelassen werden. Die Festlegung der Funktionsdaten und Fehlerschwellen hat sich demnach an den drei Auslegungskriterien Sicherheit, Verfügbarkeit und Komfortanspruch zu orientieren, die zum Teil gegensätzliche Anforderungen darstellen. Bei vorgegebenem Kostenrahmen muß hier ein Kompromiß gefunden werden, der keine allzugroße Einschränkung für die einzelnen Auslegungskriterien mit sich bringt. Im Rahmen der Toleranzen kann es bei üblichen Auslegungen zu Sollwertvorgaben kommen, die größer als der Fahrerwunsch sind, wenn die Abweichung der Führungsgröße noch kleiner ist, als die erlaubte Abweichung zur eindeutigen Fehlererkennung. Im Teillast- oder Vollastbetrieb ist dies unproblematisch, weil der Fahrer seinen Fahrerwunsch leicht korrigieren kann und im oberen Lastbereich Fehler unterhalb der Fehlertoleranzschwelle nur relativ geringe Auswirkungen auf die Fahrzeugreaktion haben.

In der Leerlaufstellung des Pedals hat der Fahrer jedoch keine direkte Möglichkeit, die Sollwertvorgabe entsprechend der Fahrzeugreaktion anzupassen. Zudem führen falsche Sollwertvorgaben im Leerlauf- und im unteren Teillastbereich zu relativ starken Fahrzeugreaktionen.

Befindet sich beispielsweise das Gaspedal in der Leerlaufstellung und bewirken die im System auftretenden, erlaubten Toleranzen, daß beide Sensorsignale nur sehr dicht unterhalb der Leerlaufkontaktschwelle liegen, kann eine auftretende Störgröße das Führungssignal nach oben hin verfälschen, ohne daß es zu einem Überschreiten der festgelegten Fehlerschwelle kommt, denn die Fehlerschwelle bezieht sich in der Regel auf den Differenzwert zwischen Signal 1 und Signal 2. Eine Überschreitung der Sollwertvorgabe um den Betrag der zulässigen Fehlerschwelle ist daher unvermeidbar. Die Höhe der Fehlerschwelle hängt von der Qualität der beiden Sensorsignale ab, die sich nur mit erhöhtem Kostenaufwand verbessern läßt.

Ebenfalls nur mit erhöhten Kosten läßt sich das aus der DE 41 08 417 bekannte Überwachungsverfahren von Sensoren durchführen, da jedem Sensor zusätzlich eine Zähleinrichtung zugeordnet werden muß und die Auswertung der Zähleinrichtungen ergänzend zur Auswertung der Sensorsignale erfolgen muß. Das Verfahren eignet sich nur zur Funktionsüberwachung von Sensoren, nicht jedoch zur Überwachung der tatsächlichen Höhe der Sensorsignale.

Die Aufgabe der Erfindung besteht darin, ein Verfahren zur Überwachung und Ermittlung von Vorgabewerten für die Motorsteuerelektronik zu schaffen, das bei vergleichbarer Sensorik eine bessere Verfügbarkeit und Sicherheit bei der Sollwertvorgabe bietet.

Erfindungsgemäß wird die Aufgabe durch ein Verfahren der eingangs beschriebenen Art gelöst, bei welchem im Falle einer Abweichung der beiden Sensorsignale voneinander, die außerhalb eines Bereiches für den jeweiligen Betriebszustand festgelegter Abweichungen liegt, das Führungssignal unter Einbeziehung der Größe des zweiten Signals bzw. der Abweichung der beiden Signale voneinander in Abhängigkeit vom jeweiligen Betriebszustand rechnerisch und/oder mit Hilfe eines Kennfeldes korrigiert wird.

Im Gegensatz zu den bisher bekannten Verfahren, bei denen lediglich ab einer bestimmten Abweichung zwischen den beiden Signalen auf Fehler erkannt wurde, bezieht das erfindungsgemäße Verfahren das Signal des zweiten Sensors bei bestimmten Abweichungen aktiv in die Korrektur des Führungssignals ein. Da eine derartige Korrektur wegen des ohnehin vorhandenen Signals des zweiten Sensors ohne baulichen Mehraufwand durchgeführt werden kann, entstehen bei der Fertigung weder auf der Seite des Aktuators noch auf der Seite der Motorsteuerelektronik Mehrkosten.

Im Gegensatz zum bekannten Verfahren, bei welchem ab einer bestimmten Fehlerschwelle aus Sicherheitsgründen allenfalls noch eine Notlaufsteuerung des Motors zugelassen werden kann, ermöglicht die aktive Einbeziehung des Signals des zweiten Sensors eine flexiblere Festlegung der Fehlerschwelle. Ob die Korrekturgröße als Kennfeld der beiden Sensorsignale abgespeichert oder durch Berechnung aus den beiden Signalwerten ermittelt wird, ist für die Qualität des ermittelten Ansteuerungssignals für die Motorelektronik ohne Bedeutung. Da die Qualität der beiden Sensorsignale, wie eingangs bereits erwähnt, meist unterschiedlich ist, ist in bevorzugter Ausgestaltung des Verfahren vorgesehen, daß das Führungssignal nur in Leerlaufrichtung korrigiert wird. Auf diese Weise wird verhindert, daß der Sensor mit den schlechteren Qualitätseigenschaften das Signal des qualitativ höherwertigen Sensors in beide Richtungen beeinflussen kann, was im Falle einer möglichen Erhöhung der Sollwertvorgabe über den Fahrerwunsch hinaus unter Sicherheitsaspekten unerwünscht ist.

Zweckmäßigerweise wird bei einer Erkennung gravierender Signalfehler ein Notlaufprogramm aktiviert oder eine Notabschaltung durchgeführt, um jegliches Sicherheitsrisiko in kritischen Betriebszuständen auszuschließen. Als Notlaufprogramm kann es z.B. sinnvoll sein, bei Erfassung eines Totalausfalls eines Sensors das Signal des anderen Sensors für die Ansteuerung der Motorelektronik zu verwenden.

Eine besonders bevorzugte Ausgestaltung des Verfahrens sieht vor, daß je nach Art und Größe der Abweichung zwischen den beiden Sensorsignalen unter Berücksichtigung des jeweiligen Betriebszustandes eines der beiden Sensorsignale oder ein rechnerisch und/oder durch ein Kennfeld erzeugtes drittes Signal, die jeweils in geeigneter Weise aufbereitet sind, zur Ansteuerung der Motorsteuerelektronik herangezogen wird.

Während bei bisher üblichen Verfahren nur das Führungssignal zur Ansteuerung der Motorelektronik zur Verfügung stand und das Signal des zweiten Sensors lediglich zur Überwachung des Führungssignals herangezogen wurde, kann bei dem erfindungsgemäßen Verfahren zwischen drei verschiedenen Sensorsignalen zur Ansteuerung der Motorelektronik ausgewählt werden. Als weiteres Kriterium für die Auswahl des zur Ansteuerung verwendeten Sensorsignals kann dabei die Qualität der einzelnen Signale herangezogen werden, wobei davon auszugehen ist, daß der qualitativ hochwertige Sensor 1 im Normalfall die beste Signalqualität liefert, das Signal des zweiten Sensors von eher schlechter Qualität ist und das durch Verknüpfung der beiden Signale erzeugte dritte Signal eine mittlere Qualität aufweist.

Zur Verbesserung der Fehlererkennung ist es auch bei dem erfindungsgemäßen Verfahren zweckmäßig, daß die Sensoren unterschiedliche Kennlinien besitzen und ihre Signale ggf. normiert werden.

Die Erzeugung eines dritten Signalwertes aus den beiden anderen Sensorsignalen und die Auswahl des jeweils zur AnSteuerung der Motorelektronik verwendeten Signals kann auch über ein einziges Kennfeld realisiert werden.

Nachfolgend wird anhand der Zeichnungen näher auf Ausführungsbeispiele der Erfindung eingegangen. Es zeigen:
- Fig. 1: einen schematischen Verfahrensablauf zur Bestimmung eines Vorgabewertes für eine Motorsteuerelektronik;
- Fig. 2: ein Korrekturkennfeld zur Bestimmung des Sollwertes 3 in dem Verfahren nach Fig. 1.

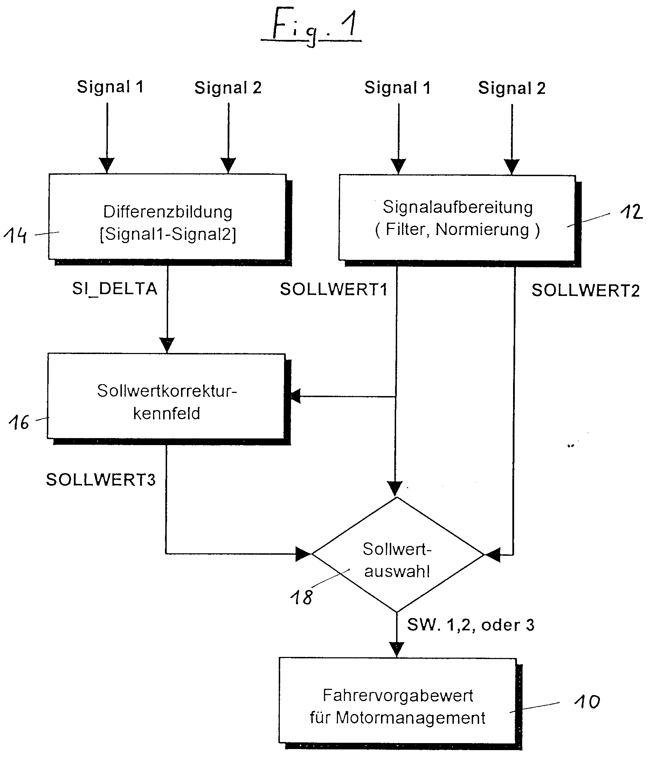

Fig. 1 stellt den Verfahrensablauf zur Ermittlung eines Vorgabewertes 10 für eine Motorsteuerelektronik in Abhängigkeit von der Fahrpedalstellung dar. Die Stellung des Fahrpedals wird von zwei unabhängig voneinander arbeitenden Sensoren (nicht gezeigt) erfaßt, deren Signale die Ausgangswerte für die Bestimmung des Vorgabewertes 10 sind. Da die Signale 1 und 2 der beiden Sensoren unterschiedliche Formate aufgrund unterschiedlicher Kennlinien der Sensoren aufweisen können, werden sie zunächst in einer Signalaufbereitung 12 zu Sollwerten 1 bzw. 2 aufbereitet. In der Signalaufbereitung 12 werden die Signale 1 und 2 beispielsweise gefiltert und normiert.

Parallel hierzu wird in einer Differenzbildungsstufe 14 die Differenz SI-DELTA der Signale 1 und 2 gebildet. Die Differenzbildung erfolgt in der Weise, daß SI-DELTA nur positive Werte annehmen kann.

Mit Hilfe des Differenzwertes SI-DELTA und des Sollwertes 1 wird über ein Sollwertkorrekturkennfeld 16 ein Sollwert 3 erzeugt, der entsprechend den Sollwerten 1 und 2 ein genormtes Format besitzt.

Damit stehen drei Sollwerte zur Verfügung, die vom Format her den Vorgabewert 10 für die Motorsteuerelektronik bilden können. In einer Auswahlstufe 18 wird festgelegt, welcher der drei Sollwerte letztendlich zur Ansteuerung dient.

Bei der Sollwertauswahl in der Auswahlstufe 18 wird auch berücksichtigt, daß der Sensor 1 eine bessere Qualität als der Sensor 2 besitzt und folglich unter normalen Umständen von einer höheren Genauigkeit des Sollwerts 1 gegenüber dem Sollwert 2 ausgegangen werden kann. Beim Sollwert 3, der unter Berücksichtigung der Größen beider Signale erzeugt wird, ist von einer mittleren Qualität auszugehen. Es wird daher bevorzugt, Sollwert 1 zur Ansteuerung der Motorsteuerelektronik Verwendung finden, während auf den Sollwert 3 erst bei einer gewissen Differenz zwischen den beiden ursprünglichen Signalen zurückgegriffen wird und Sollwert 2 nur in Ausnahmefällen, z.B. bei einem Totalausfall des ersten Sensors zur Sicherung von Notlaufeigenschaften Verwendung findet.

Durch den zusätzlich zur Verfügung stehenden Sollwert 3 ist bei gleicher Sicherheit und gleichem Kostenaufwand eine höhere Verfügbarkeit des Systems gegeben, da das System nicht mit einer starren Fehlererkennung arbeitet, sondern in Grenzbereichen auf den Sollwert 3 zurückgreifen kann. Je nach Auslegung des Systems kann auch bei gleicher Verfügbarkeit und gleichen Kosten wie bei bisherigen Systemen eine höhere Sicherheit erreicht werden oder das Verfahren kann zur Kostensenkung eingesetzt werden, da bei im Vergleich zu bekannten Lösungen gleichbleibender Sicherheit und Verfügbarkeit preisgünstigere Sensoren zum Einsatz kommen können.

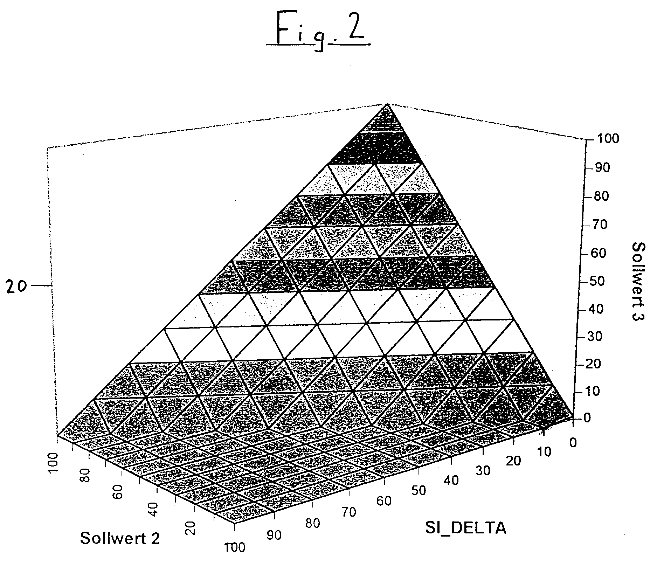

Fig. 2 zeigt beispielhaft ein Korrekturkennfeld 20 zur Bestimmung eines dritten Sollwertes neben den von den eigentlichen Sensoren erzeugten Sollwerten 1 und 2. Im Gegensatz zum Ausführungsbeispiel nach Fig. 1 wird bei dem Fig. 2 dargestellten Korrekturkennfeld neben dem Differenzwert SI-DELTA zwischen den beiden Eingangssignalen der genormte Sollwert 2 des zweiten Sensors zur Bestimmung des dritten Sollwertes herangezogen. Das Korrekturkennfeld 20 sieht vor, daß bei SI-DELTA = 0, d.h. wenn das Signal 1 dem Signal 2 entspricht, auch der Sollwert 3 gleich den Sollwerten 1 und 2 ist. Bei Abweichungen zwischen den beiden Signalen wird der Sollwert 3 in Abhängigkeit von der absoluten Höhe des Sollwertes 2 in Leerlaufrichtung korrigiert. Statt des Wertes SI-DELTA kann auch der Sollwert 1 zur Bestimmung des Sollwertes 3 herangezogen werden, wobei die Bildung des Differenzwertes bereits bei den bisher bekannten Verfahren zur Überwachung gebildet wurde und deshalb leicht auf diesen Wert zurückgegriffen werden kann.

Der in Fig. 1 dargestellte Ablaufplan des Verfahrens kann grundsätzlich durch die Programmierung eines einzigen Kennfeldes ersetzt werden, bei dem der Vorgabewert 10 in Abhängigkeit von den Absolutwerten des ersten und zweiten Signals gebildet wird. Eine derartige Vorgehensweise erfordert jedoch im Vorfeld umfassendere Analysen, denen bei der Programmierung des Kennfeldes Rechnung getragen werden muß.

## Patentansprüche

1. Verfahren zur Überwachung und Ermittlung von Vorgabewerten (10) für eine Motorsteuerelektronik bei mit einer elektronischen Fahrpedalanlage ausgerüsteten Fahrzeugen, bei welcher die Fahrpedalstellung von wenigstens zwei unabhängig voneinander arbeitenden Sensoren erfaßt wird, von denen einer ein Führungssignal erzeugt, das in geeigneter Weise aufbereitet normalerweise zur Ansteuerung der Motorsteuerelektronik eingesetzt wird, während das Signal des zweiten Sensors zur Überwachung des Führungssignals herangezogen wird, **dadurch gekennzeichnet**, daß im Falle einer Abweichung der beiden Sensorsignale voneinander, die außerhalb eines Bereiches für den jeweiligen Betriebszustand festgelegter Abweichungen liegt, das Führungssignal unter Einbeziehung der Größe des zweiten Signals bzw. der Abweichung der beiden Signale voneinander in Abhängigkeit vom jeweiligen Betriebszustand rechnerisch und/oder mit Hilfe eines Kennfeldes korrigiert wird.

2. Verfahren nach Anspruch 1, **dadurch gekennzeichnet**, daß das Führungssignal nur in Leerlaufrichtung korrigiert wird.

3. Verfahren nach Anspruch 1 oder 2, **dadurch gekennzeichnet**, daß bei einer Erkennung gravierender Signalfehler ein Notlaufprogramm aktiviert oder eine Notabschaltung durchgeführt wird.

4. Verfahren nach einem der Ansprüche 1 bis 3, **dadurch gekennzeichnet**, daß bei Erfassung eines Totalausfalls eines Sensors das Signal des anderen Sensors für die Ansteuerung der Motorelektronik verwendet wird.

5. Verfahren nach einem der vorhergehenden Ansprüche, **dadurch gekennzeichnet**, daß je nach Art und Größe der Abweichung zwischen den beiden Sensorsignalen unter Berücksichtigung des jeweiligen Betriebszustandes eines der beiden Sensorsignale oder ein rechnerisch und/oder durch ein Kennfeld erzeugtes drittes Signal, die jeweils in geeigneter Weise aufbereitet sind, zur Ansteuerung der Motorelektronik herangezogen wird.

6. Verfahren nach einem der vorhergehenden Ansprüche, **dadurch gekennzeichnet**, daß die Sensoren unterschiedliche Kennlinien besitzen und ihre Signale ggf. normiert werden.
